# EUROPÄISCHE PATENTSCHRIFT

(11) **EP 2 699 770 B1**
(45) Veröffentlichungstag und Bekanntmachung des Hinweises auf die Patenterteilung: **05.04.2017**
(21) Anmeldenummer: 12728171.5
(22) Anmeldetag: 20.04.2012
(51) Int. Cl.: F01N 3/022, F01N 3/035, F01N 3/28

(54) **PARTIKELFILTER MIT KATALYTISCHER BESCHICHTUNG**
PARTICLE FILTER PROVIDED WITH A CATALYTIC COATING
FILTRE A PARTICULES COMPRENANT UN REVETEMENT CATALYTIQUE

(30) Priorität: 21.04.2011 DE 102011018911; 12.08.2011 DE 102011110097
(43) Veröffentlichungstag der Anmeldung: 26.02.2014
(73) Patentinhaber: DEUTZ Aktiengesellschaft, 51149 Köln (DE)
(72) Erfinder: QRIQRA, Abderrahim, 51107 Köln (DE)
(86) Internationale Anmeldenummer: PCT/EP2012/001716
(87) Internationale Veröffentlichungsnummer: WO 2012/143139

(56) Entgegenhaltungen:
- EP-A1- 2 273 079
- WO-A1-01/12320

## Beschreibung

Die Erfindung betrifft eine Dieselbrennkraftmaschine, ein Verfahren zur Filterung von Abgasen sowie ein Filterelement.

Derartige Filterelemente sind beispielsweise aus der EP 89751 oder der EP 308525 bekannt. Aus der WO 01/12320 A1 ist ein katalytischer Wabenkörperfilter mit porösen Trennwänden bekannt. Die EP 2 273 079 A1 zeigt eine Abgasnachbehandlung mit SCR-Katalysator.

Heutige Partikelfiltersysteme bestehen in der Regel aus einer Kombination von DOC vor DPF und benötigen in der Regel einen DOC vor dem DPF.

Bei aktiv thermisch regenerierenden Systemen wird der DOC benötigt, damit Kohlenwasserstoffe und CO oxidiert werden können und die dabei erzeugte Verbrennungswärme zum Aufheizen des DPF nutzbar wird. In Abhängigkeit von der Temperatur des DOC wird dazu häufig der HC- und CO- Anteil im Abgas durch Spät- oder Nach- Einspritzung von Brennstoff erhöht.

Durch eine katalytische Beschichtung des DPF alleine wird dieser Effekt nur ungenügend erreicht, da die Wärme vor Eintritt in den DPF erzeugt werden sollte. Erzeugung der Wärme im DPF führt nur zur Erwärmung der Abströmseite. Der Wärmetransport in Richtung zur Anströmseite durch Wärmeleitung ist in der Regel zu schlecht um einen Rußabbrand auch auf der Anströmseite zu ermöglichen.

Bei passiv durch N02 regenerierenden Systemen wird der DOC zur Oxidation von NO zu NO2 benötigt. Diese Oxidation wird durch CO und HC behindert. Daher ist eine weitgehende Oxidation von HC und CO auf der Anströmseite des DOC erforderlich, damit im verbleibenden Rest des DOC NO2 zur Rußoxidation gebildet werden kann. Bereits vor Eintritt in den DPF wird NO2 benötigt, um Verblocken der Anströmseite des DPF durch Ruß zu verhindern. Das im Motor gebildete N02 reicht dafür in der Regel nicht, da es zuerst für die Oxidation von ebenfalls vom Motor emittierten HC und CO verbraucht wird. Die Reichweite der Diffusion von NO2 entgegen der Hauptströmungsrichtung im DPF beträgt nur einige µm. Daher steht das in DPF erzeugte N02 nicht zur Reaktion mit dem Ruß auf der Anströmseite zur Verfügung.

In der Vergangenheit hat es Versuche gegeben, auf den vorgeschalteten DOC zu verzichten. Aus den genannten Gründen sind diese Versuche nur für Betriebsbedingungen erfolgreich, bei denen die zum Abbrand nötige Abgastemperatur regelmäßig überschritten wird, wie im Rennsport oder bei additiv gestützten Systemen.

Nach wie vor stellt sich für viele Anwender die Frage, ob sich der Bauraum für ein Partikelfiltersystem verringern lässt. Beispielsweise würde sich der DOC bei gleicher Wirksamkeit durch Erhöhen der Platinkonzentration bei gleichem Gesamt-Platingehalt geometrisch verkleinern lassen. Dieses Bestreben erfährt seine Grenze durch die begrenzte mechanische Festigkeit des DOC, die es nicht erlaubt, dünne keramische Katalysatorscheiben vor den DPF zu spannen. Zugleich verringert sich trotz der gleichen Gesamtedelmetallbeladung der Wirkungsgrad, sobald die Diffusionsgeschwindigkeit zum geschwindigkeitsbegrenzenden Schritt wird.

Ein Versuch, den DOC vor den DPF zu kleben, hat wenig Aussicht auf Erfolg wegen der schlechten Überströmung von den DOC in die DPF-Kanäle und wegen der thermischen Spannungen, die sich zwischen DOC und DPF ausbilden.

Die Aufgabe der Erfindung besteht darin, den benötigten Bauraum eines DPF-Systems zu verkleinern, ohne die beschriebenen Probleme in Kauf zu nehmen.

Die Aufgabe der vorliegenden Erfindung wird gelöst durch die Vorrichtungen und das Verfahren gemäß der Ansprüche 1, 8 und 9. Weitere vorteilhafte Ausgestaltungen sind in den Unteransprüchen enthalten.

Beispiele (Fig.1-6,9) und Ausführungsbeispiele (Fig. 7,8) der Erfindung sind in den Zeichnungen dargestellt und in der nachfolgenden Beschreibung näher erläutert.
Es zeigen:

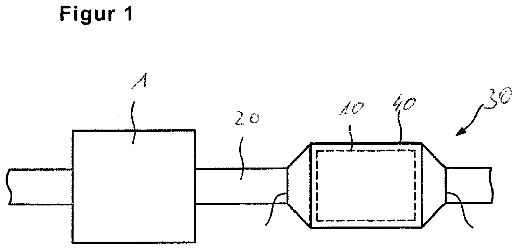

Figur 1 Brennkraftmaschine mit DOC und DPF enthaltendem Filterelement im Abgastrakt

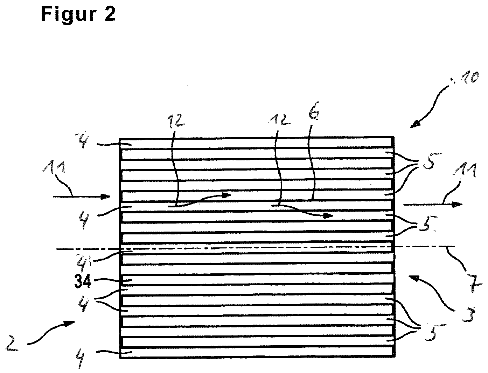

Figur 2 Filterelement aus Figur 1

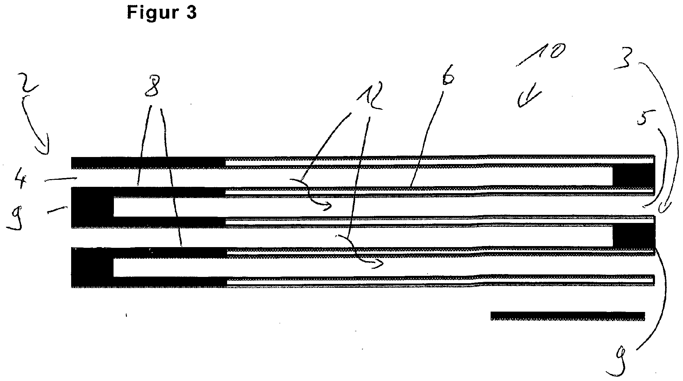

Figur 3 Versiegelung eines Teilbereichs der Filterwandfläche des Filterelements aus Figur 2 durch die Beschichtung

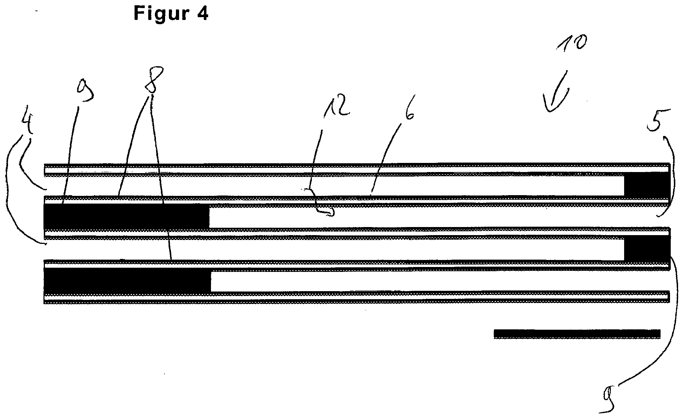

Figur 4 Verlängerung der Stopfen des Filterelements aus Figur 2

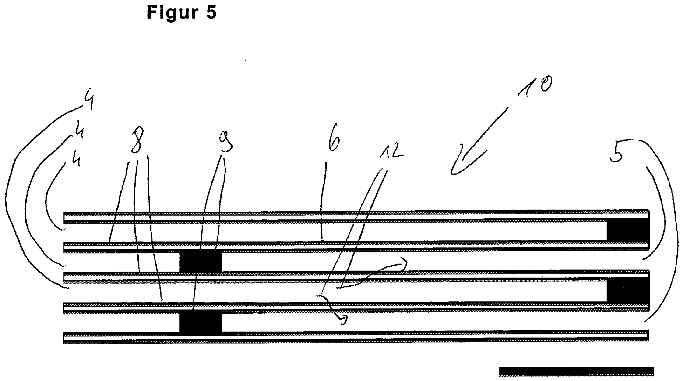

Figur 5 Verschiebung der Stopfen des Filterelements aus Figur 2

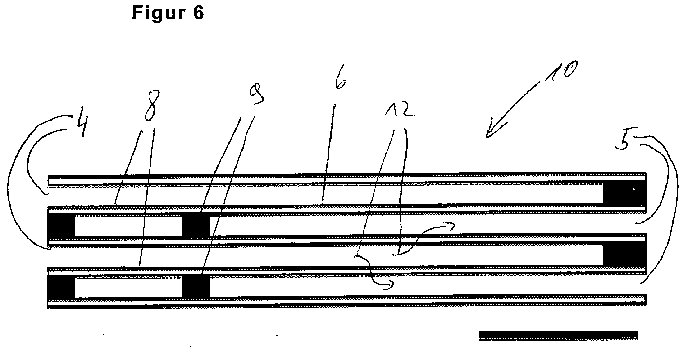

Figur 6 Ersatz des verlängerten Stopfens durch zwei Lagen im Filterelement aus Figur 2

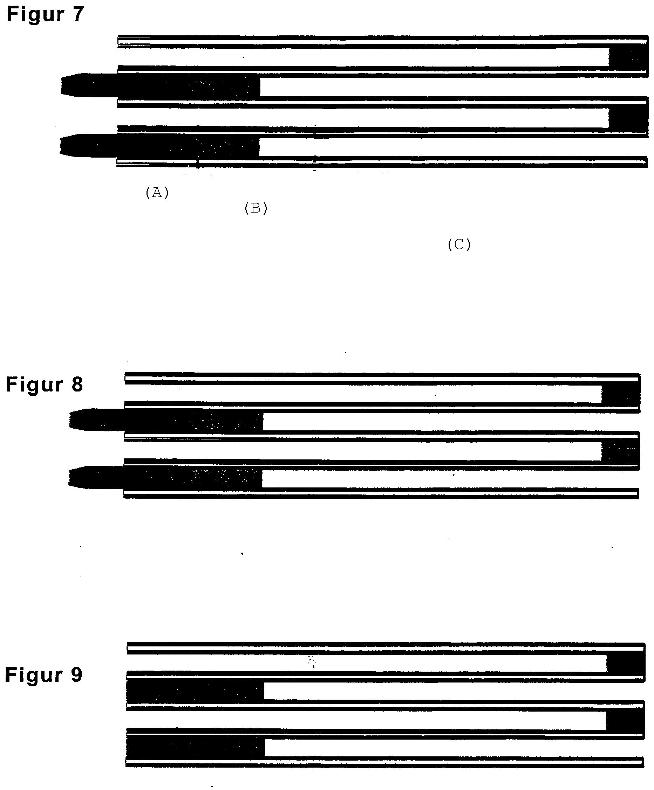

Figur 7 Beispiel für eine Zonenbeschichtung auf dem OFC
Figur 8 erfindungsgemäß verlängerter beschichteter Stopfen verringert Einfluss von Rußabscheidung
Figur 9 für Strömung undurchlässiger Stopfenbereich für Diffusion durchlässig.

Die minimale Größe des DOC-Segments am DPF soll so bemessen sein, dass ein Kontakt zwischen Gasphase und Filterwand durch Diffusion innerhalb dieser Strecke möglich ist. Für die üblichen Strömungsgeschwindigkeiten im DPF reichen dafür etwa 30 mm. Verglichen mit dem heute üblichen Aufbau, einem etwa 100 mm langen DOC sowie einem etwa 20 bis 50 mm Spalt zwischen DOC und DPF, ergibt sich damit eine Reduktion des Bauraums um etwa 90 mm.

Die Integration des DOC in den DPF gelingt, indem die Filterwirkung des DPF auf einer für die DOC-Wirkung ausreichenden Länge an der Anströmseite blockiert, bzw. die Permeabilität der Filterfläche unterbrochen wird. Der blockierte Bereich wird somit zum DOC-Bereich innerhalb des Filterbereichs 30. Die technische Umsetzung dieser Filterversiegelung erfolgt wie folgt.

Verblocken des Wanddurchtritts in Anströmbereich des DPF durch Tauchen in eine Beschichtung, die in die Poren des DPF eindringt und sie nach dem Kalzinieren verschließt, so dass kein Gasdurchtritt entlang der Pfeile 12 möglich ist. Die zusätzliche Beschichtung darf nur so stark aufgetragen werden, dass sich der Kanalquerschnitt nicht wesentlich verringert.

Verlängern der Stopfen 9, die die Austrittskanäle von der Anströmseite verschließen, auf die für den DOC-Anteil gewünschte Länge. Die zusätzliche keramische Masse ergibt eine zusätzliche Wärmekapazität, die die Dynamik von Abgas-Temperaturschwankungen dämpft. Das kann insbesondere für Fahrzyklen mit hohem Leerlaufanteil vorteilhaft sein.

Versetzen der Stopfen 9, die die Austrittskanäle von der Anströmseite verschließen um die für den DOC-Anteil gewünschte Länge in Richtung der Austrittsseite. Von Vorteil ist, dass sich das Anspringverhalten beim Kaltstart kaum unterscheidet vom normalen DOC. Die zur Anströmseite offenen "toten Enden" der Ausströmkanäle werden sich im Lauf der Zeit mit Ruß füllen.

Versetzen der Stopfen 9, die die Austrittskanäle von der Anströmseite verschließen um die für den DOC-Anteil gewünschte Länge in Richtung der Austrittsseite und Verschließen der offenen "toten" Kanalenden mit einer zweiten Lage von Stopfen 9. Die Wärmekapazität vergrößert sich geringfügig, verglichen mit der obigen Version.

Bei allen Varianten erfolgt zusätzlich eine Zonenbeschichtung, die für diesen als DOC umfunktionierten Anströmbereich eine entsprechend der reduzierten Oberfläche erhöhte Edelmetallbeladung vorsieht. Die Beschichtung kann insbesondere die Metalle Platin, Palladium oder Rhodium oder Mischungen davon aufweisen. Die Beschichtung weist vorteilhaft ein Molverhältnis von Platin zu Palladium zwischen 15 : 1 und 1 : 3 auf.

Ein weiteres Beispiel sieht ein- und mehrschichtige Katalysatoren vor, die als Kohlenwasserstoffe adsorbierendes Material Zeolithe enthalten sowie katalytisch aktive Edelmetalle der Platingruppe (Platin, Palladium, Rhodium, Iridium und Ruthenium), die bevorzugt auf Aluminiumoxid abgeschieden sind. Die Kohlenwasserstoff adsorbierenden Zeolithe sind bevorzugt in einer separaten Schicht angeordnet, die direkt auf einem Tragkörper aufgebracht ist. Die Zeolithe können mit Edelmetallen wie Palladium oder Silber beschichtet sein. Die weiteren Katalysatorschichten sind auf dieser adsorbierenden Schicht aufgebracht und können neben dem mit den Platingruppenmetallen aktivierten Aluminiumoxid noch ein Cer enthaltendes Oxid aufweisen. Ein vorteilhaftes Platin-Palladium Verhältnis beträgt 2 : 1. Weitere Versuche haben ergeben, dass der Oxidationskatalysator Palladium und Platin enthält, wobei der Palladiumanteil Pd/(Pd+Pt) wenigstens 40% beträgt, bevorzugt wenigstens 60%.

Um die Vorteile eines N02-unterstützen Rußabbrandes zu nutzen, kann zur Imprägnierung der Wandungen ein Oxidationskatalysator mit viel Platin eingesetzt werden, während der in der Beschichtung vorliegende Katalysator einen hohen Palladiumanteil aufweist. Besonders bevorzugt wird eine dreifache oxidationskatalytische Beschichtung, bei der die Anströmkanäle mit einer Beschichtung auf der Basis von Eisen, Cer oder Vanadium beschichtet sind (Verringerung der Zündtemperatur des Rußes), die Wandungen mit einem Katalysator auf Platinbasis imprägniert sind (N02-unterstützter Rußabbrand und Oxidation des Brennstoffs), und die Abströmkanäle mit einer Beschichtung auf Palladiumbasis versehen sind (Oxidation des Brennstoffs ohne N02-Produktion).

Durch das Blockieren des Wanddurchtritts im Katalysebereich des Partikelfilters auf der Anströmseite wird die Rußablagerung weitgehend unterbunden. Dadurch wird das an der katalytischen Beschichtung entstehende NO2 nicht sofort verbraucht. Im Filtrations-Bereich des Partikelfilters, in dem der Wanddurchtritt in Pfeilrichtung 12 ermöglicht ist, lagert sich der Ruß ab. Seine Oxidation erfordert eine ausreichende Menge NO2 an jedem Ort des Ablagerungskanals. Die Produktion von N02 im Katalysebereich sichert diese ausreichende Menge auch für den zuvorderst im Filtrationsbereich abgeschiedenen Ruß. Die kleinere Kontaktfläche im Katalysebereich - verglichen mit einem üblichen DOC wird durch eine erhöhte Edelmetallkonzentration und den erheblich verringerten Bauraum. aufgewogen. Die mittlere Porengröße des Filtermaterials liegt vorteilhafterweise in einem Bereich zwischen 5 Mikrometern und 30 Mikrometern.
In Figur 1 wird eine Brennkraftmaschine 1 offenbart. Die Abgase werden über ein Abgasrohr 20 abgeleitet, in dem eine Filtereinrichtung 30, die ein Gehäuse 40 aufweist, angeordnet ist. Mit dieser Filtereinrichtung 30 werden Rußpartikel aus dem im Abgasrohr 20 strömenden Abgas der Brennkraftmaschine 1 herausgefiltert. Dies ist insbesondere bei Diesel-Brennkraftmaschinen erforderlich, um die gesetzlichen Bestimmungen einzuhalten. Die Filtereinrichtung 30 umfasst ein zylindrisches Gehäuse 40, in dem eine im vorliegenden Ausführungsbeispiel rotationssymmetrisches, insgesamt ebenfalls zylindrisches Filterelement 10 angeordnet ist.

In Figur 2 ist ein Querschnitt durch ein Filterelement 10 dargestellt. Das Filterelement 10 kann beispielsweise als extrudierter Formkörper aus einem keramischen Material oder einem glaskeramischen Werkstoff wie zum Beispiel Cordierit, Aluminiumtitanat oder Siliziumkarbid hergestellt werden.
Das Filterelement 10 wird in Richtung der Pfeile 11 von aus der Brennkraftmaschine 1 stammendem Abgas durchströmt. Die Eintrittsfläche hat in Figur 2 das Bezugszeichen 2, die Austrittsfläche weist das Bezugszeichen 3 auf.

Parallel zu einer Längsachse 7 des Filterelements 10 verlaufen mehrere Eintrittskanäle 4 im Wechsel mit Austrittskanälen 5. Die Eintrittskanäle 4 sind an der Austrittsfläche 3 verschlossen. Die Verschlussstopfen 9 sind in Figur 2 ohne Bezugszeichen dargestellt. Im Gegensatz dazu sind die Austrittskanäle 5 an der Austrittsfläche 3 offen und im Bereich der Eintrittsfläche 2 verschlossen. Der Strömungsweg des ungereinigten Abgases führt also in einen der Eintrittskanäle 4 und von dort durch eine Filterwand 6 in einen der Austrittskanäle 5. Beispielhaft wird dieser Gasdurchtritt durch Pfeile 12 dargestellt. Beim Gasdurchtritt entlang der Pfeile 12 lagern sich die Rußpartikel in den porösen Filterwänden 6 ab.

Figur 3 zeigt die Versiegelung - durch die Beschichtung versiegelter, für die Strömung undurchlässiger Bereich des DPF - eines Teilbereichs der Filterwandfläche 8 des Filterelements 10 aus Figur 2 durch die Beschichtung, die bei der Herstellung des Filterelements auf den Teilbereich 8 aufgebracht wird. Die Verschlussstopfen sind durch Bezugszeichen 9 dargestellt. Im Gegensatz dazu sind die Austrittskanäle 5 an der Austrittsfläche 3 offen und im Bereich der Eintrittsfläche 2 verschlossen. Der Strömungsweg des ungereinigten Abgases führt also in einen der Eintrittskanäle 4 und von dort durch eine Filterwand 6 in einen der Austrittskanäle 5. Beispielhaft wird dieser Gasdurchtritt durch Pfeile 12 dargestellt. Beim Gasdurchtritt entlang der Pfeile 12 lagern sich die Rußpartikel in den porösen Filterwänden 6 ab. Ein Gasdurchtritt ist in den Teilbereichen 8 und Hülse/Stopfen 9 nicht möglich.

In Figur 4 wird der durch die Verlängerung der Stopfen 9 des Filterelements für die Strömung undurchlässige Bereich des DPF aus Figur 2 dargestellt.

Figur 5 offenbart den durch die Verschiebung der Stopfen 9 entstandenen nicht durchströmten Bereich des DPF des Filterelements aus Figur 2.

In Figur 6 wird der Ersatz des durch zwei Lagen verlängerten Stopfens 9 und damit nicht durchströmte Bereich des DPF im Filterelement aus Figur 2 gezeigt.

Der OFC (Oxidation Filter Catalyst) fasst die bisherige Aufteilung in DOC und DPF in einem Keramikkörper zusammen. Der OFC behindert die Partikelabscheidung im Anströmbereich des katalytisch beschichteten Partikelfilters, damit in diesem Bereich der DOC-Funktion - der Oxidation von Kohlenwasserstoffen - Vorrang eingeräumt wird.

Bei diesem OFC besteht in der geringeren Temperatur des Anströmbereichs kein Nachteil, da hier kaum Partikel abgeschieden werden. Dieser Bereich kann beim OFC genutzt werden, um den abströmseitigen Filterbereich durch Kohlenwasserstoff-Oxidation aufzuheizen. Darüber hinaus sorgt die weitgehende Oxidation der Kohlenwasserstoffe im Oxidierbereich vor der Partikelabscheidung dafür, dass die Porosität der abgeschiedenen Partikelschicht erhalten bleibt.

Die Porosität der Rußschicht ist die Folge der statistischen Bewegungen der Rußpartikel vor ihrer Abscheidung. Sie beträgt in der Regel > 90% des Schichtvolumens.

Diese Porosität ist Voraussetzung für die Diffusion in die Rußschicht und damit Voraussetzung für einen Partikelabbrand durch den CRT-Effekt. Auf den Abbrand durch Sauerstoff wirkt sie sich ebenfalls günstig aus. Wird diese Porosität durch Kohlenwasserstoff-Einlagerung gestört (Zusammenbrechen der porösen Struktur durch die Adhäsion flüssiger Komponenten), wird die Partikeloxidation behindert und die Gefahr der Verblockung besteht. Dieser Gefahr lässt sich beim bisher bekannten CSF nur durch sehr zeit- und energieaufwändige Regeneration begegnen. Bei dem bekannten beschichteten Partikelfilter (CSF) scheiden sich die Partikel auch im Anströmbereich des Partikelfilters ab. Dort sind die Kohlenwasserstoffe noch nicht oxidiert und können bei niedriger Abgastemperatur zum Zusammenfallen der porösen Struktur der Rußschicht führen.

Darüber hinaus verhindern die Kohlenwasserstoffe im Anströmbereich des CSF die Oxidation von NO zu NO2 mit der Folge, dass in diesem Bereich keine Rußoxidation durch den CRT-Effekt möglich ist. Auch dieses Problem wird mit dem OFC gelöst, da die NO-Oxidation im Filterbereich nicht mehr durch die Kohlenwasserstoffe blockiert ist.
Zur optimalen Funktion wird der OFC mit einer Zonenbeschichtung versehen sein: Im Oxidierbereich zur HC-Oxidation ist eine höhere Edelmetallkonzentration als im Filterbereich sinnvoll. Zusätzlich könnte die Beschichtung im vorderen Teil dieses Bereichs mit Palladium gemischt sein, da hier noch keine NO-Oxidation für den CRT-Effekt sinnvoll ist (vgl. Abb.7).
Das Beispiel für eine Zonenbeschichtung auf dem OFC in Figur 7 zeigt auf der linken Seite der Stopfen einen Bereich (A) mit hoher Pt und Pd-Konzentration zur HC-Oxidation. Im rechten Bereich der Stopfen ist ein Bereich (B) mit hoher Pt-Konzentration zur NO-Oxidation dargestellt. Hinter den oben beschriebenen Bereichen folgt ein Bereich (C) mit geringerer PT-Konzentration zur vollständigen HC-Oxidation und zur Unterstützung des CRT-Effekts. Die Erfindung ist vorrangig für Maschinen gedacht, bei denen der relative Oxidierbereich des OFC ausreicht, um die Kohlenwasserstoffe so weit zu oxidieren, dass sie sich nicht mehr in flüssiger Form in den Ruß einlagern. Die ist insbesondere für Kraftfahrzeuge mit einer geringen Motorleistung in Relation zur Fahrzeugmasse der Fall, bei denen die Abgastemperatur im Mittel über 200°C liegt. Ebenso ist die Erfindung für Maschinen sinnvoll, die selten im niedrigen Lastbereich unter 200°C Abgastemperatur betrieben werden.
Bei Anwendungen, bei denen die Abgastemperaturen oberhalb von 200°C liegen, führt der OFC zu einer deutlichen Ersparnis an Kosten, Raum und Masse. Volumen und Masse des OFC ist um den Oxidierbereich größer als der DPF. Dieser Bereich beträgt jedoch nur etwa 20 % des Bauraums eines vorgeschalteten DOC. Die wesentliche Kostenersparnis ergibt sich dadurch, dass nur ein Keramikkörper benötigt wird.
Die Partikelabscheidung wird im Oxidierbereich durch Versiegeln der Filterporen (Abb.3) oder durch Verlängern der Stopfen (vgl. Abb. 4,7-9) verhindert.
Es bildet sich ein dünner Rußbelag durch Thermophorese auf dem Oxidierbereich. Den nachteiligen Auswirkungen dieses Belags kann beim OFC entgegengewirkt werden, indem die Stopfen geringfügig über den Filterkörper hinaus verlängert werden, wie dies in Abb. 8 dargestellt ist. Die Abbildung in Figur 8 zeigt, dass über die Stirnfläche des DPF hinaus verlängerte katalytisch beschichtete Stopfen den Einfluss von Rußabscheidung durch Thermophorese auf die Strömung verringern. Im Gegensatz zum DOC beeinträchtigen die an diesen verlängerten Stopfen des OFC durch Thermophorese abgeschiedenen Partikel nicht den Durchfluss durch die Kanäle.
Mit dem OFC sind die gleichen Strategien zur Emissionsminderung möglich wie mit den herkömmlichen Systemen. Für Motoren mit hoher NOx-Rohemission empfiehlt sich die Partikelregeneration durch den CRT-Effekt und die nachfolgende NOx-Reduktion durch einen SCR-Katalysator. Für Motoren, deren NOx-Rohemission sehr gering ist, empfiehlt es sich, einen NOx-Speicher in die Stopfen zu integrieren, wie dies in Abb. 9 gezeigt wird und die Porosität der Keramik in diesem Bereich zu erhalten. Bei Motoren mit nicht sehr geringer NOx-Rohemission gibt es einen dem OFC nachgeschalteten NOx-Speicherkatalysator, welcher in einem günstigeren Temperaturbereich, dessen Schwankungen, verglichen mit der Anordnung NSK vor DPF, durch den OFC gepuffert sind.
Figur 9 zeigt, dass der für die Strömung undurchlässige Stopfenbereich für Diffusion durchlässig bleibt und erlaubt, einen NOx-Speicher als Material für die Stopfen zu verwenden.

## Patentansprüche

1. Filterelement, insbesondere zur Filterung von Abgasen einer Dieselbrennkraftmaschine (1), mit einer Eintrittsfläche (2) und mit einer Austrittsfläche (3), mit einer Vielzahl von Eintrittskanälen (4) und mit einer Vielzahl von Austrittskanälen (5), wobei die Eintrittskanäle (4) und die Austrittskanäle (5) durch Filterwände (6) aus einem offenporigen Material getrennt sind, wobei parallel zu einer Längsachse (7) des Filterelements (10) Eintrittskanäle (4) im Wechsel mit Austrittskanälen (5) verlaufen und die Eintrittskanäle (4) an der Austrittsfläche (3) und die Austrittskanäle (5) an der Eintrittsfläche (2) über einen Teilbereich der Filterwandfläche (8) verschlossen sind, **dadurch gekennzeichnet, dass** die Stopfen (9) über den Filterkörper stromaufwärts hinaus verlängert werden, und dass die Stopfen (9) katalytisch beschichtet sind.

2. Filterelement nach Anspruch 1,
**dadurch gekennzeichnet, dass** der Teilbereich der Filterwandfläche (8) gasdicht ausgeführt ist.

3. Filterelement nach Anspruch 2,
**dadurch gekennzeichnet, dass** der gasdichte Teilbereich der Filterwandfläche (8), der insbesondere den Eintrittskanälen (4) zugewandt ist, wenigstens einen Katalysator aufweist.

4. Filterelement nach einem der vorgenannten Ansprüche,
**dadurch gekennzeichnet, dass** der gasdichte Teilbereich der Filterwandfläche (8), der insbesondere den Eintrittskanälen (4) zugewandt ist, Edelmetall aufweist.

5. Filterelement nach einem der vorgenannten Ansprüche,
**dadurch gekennzeichnet, dass** das Filterelement (10) beispielsweise als extrudierter Formkörper aus einem keramischen Material, wie zum Beispiel Cordierit, ausgeführt ist.

6. Filterelement nach einem der vorgenannten Ansprüche,
**dadurch gekennzeichnet, dass** der gasdichte Teilbereich der Filterwandfläche (8), der insbesondere den Eintrittskanälen (4) zugewandt ist, als Stopfen (9) ausgeführt ist.

7. Filterelement nach einem der vorgenannten Ansprüche,
**dadurch gekennzeichnet, dass** die Querschnittsfläche aller Eintrittskanäle (4) größer als die Querschnittsfläche aller Austrittskanäle (5) ist und dass die Zahl der Eintrittskanäle (4) größer als die Zahl der Austrittskanäle (5) ist.

8. Dieselbrennkraftmaschine, umfassend wenigstens eine im Abgastrakt befindliche Filtereinrichtung (30), die wenigstens einen Dieseloxidationskatalysator (DOC) und wenigstens einen Dieselpartikelfilter (DPF) in einem Keramikkörper zusammen aufweist, wobei sie wenigstens ein Filterelement (10) gemäß einem der Ansprüche 1 bis 7 aufweist.

9. Verfahren zur Filterung insbesondere von Abgasen einer Dieselbrennkraftmaschine,
**dadurch gekennzeichnet, dass** eine Vorrichtung nach einem der vorgenannten Ansprüche einen CRT-Effekt aufweisend zum Einsatz kommt.

## Claims

1. Filter element, in particular for filtering exhaust gases of a diesel internal combustion engine (1), having an inlet surface (2) and having an outlet surface (3), having a multiplicity of inlet ducts (4) and having a multiplicity of outlet ducts (5), wherein the inlet ducts (4) and the outlet ducts (5) are separated from one another by filter walls (6) composed of an open-pored material, wherein inlet ducts (4) run, in alternating fashion with outlet ducts (5), parallel to a longitudinal axis (7) of the filter element (10), and the inlet ducts (4) are closed off over a subregion of the filter wall surface (8) at the outlet surface (3) and the outlet ducts (5) are closed off over a subregion of the filter wall surface (8) at the inlet surface (2), **characterized in that** the plugs (9) are elongated beyond the filter body in an upstream direction, and **in that** the plugs (9) are catalytically coated.

2. Filter element according to Claim 1,
**characterized in that** the subregion of the filter wall surface (8) is of gas-impermeable design.

3. Filter element according to Claim 2,
**characterized in that** that gas-impermeable subregion of the filter wall surface (8) which faces in particular toward the inlet ducts (4) has at least one catalyst.

4. Filter element according to one of the preceding claims,
**characterized in that** that gas-impermeable subregion of the filter wall surface (8) which faces in particular toward the inlet ducts (4) has high-grade metal.

5. Filter element according to one of the preceding claims,
**characterized in that** the filter element (10) is formed for example as an extruded moulded body composed of a ceramic material such as for example cordierite.

6. Filter element according to one of the preceding claims,
**characterized in that** that gas-impermeable subregion of the filter wall surface (8) which faces in particular toward the inlet ducts (4) is in the form of a plug (9).

7. Filter element according to one of the preceding claims,
**characterized in that** the cross-sectional area of all inlet ducts (4) is larger than the cross-sectional area of all outlet ducts (5), and **in that** the number of inlet ducts (4) is greater than the number of outlet ducts (5).

8. Diesel internal combustion engine comprising at least one filter device (30) which is situated in the exhaust tract and which has at least one diesel oxidation catalyst (DOC) and at least one diesel particle filter (DPF) in a ceramic body, wherein said filter device has at least one filter element (10) according to one of Claims 1 to 7.

9. Method for filtering in particular exhaust gases of a diesel internal combustion engine, **characterized in that** a device is used in accordance with one of the preceding claims so as to have a CRT effect.

## Revendications

1. Élément de filtre, en particulier pour la filtration de gaz d'échappement d'un moteur à combustion interne diesel (1), comprenant une surface d'entrée (2) et une surface de sortie (3), une pluralité de canaux d'entrée (4) et une pluralité de canaux de sortie (5), les canaux d'entrée (4) et les canaux de sortie (5) étant séparés par des parois de filtre (6) constituées d'un matériau à pores ouverts, des canaux d'entrée (4) s'étendant parallèlement à un axe longitudinal (7) de l'élément de filtre (10) en échange avec des canaux de sortie (5) et les canaux d'entrée (4) étant fermés au niveau de la surface de sortie (3) et les canaux de sortie (5) étant fermés au niveau de la surface d'entrée (2) par le biais d'une région partielle de la surface de paroi de filtre (8), **caractérisé en ce que** les bouchons (9) sont prolongés vers l'amour au-delà du corps de filtre, et **en ce que** les bouchons (9) sont pourvus d'un revêtement catalytique.

2. Élément de filtre selon la revendication 1, **caractérisé en ce que** la région partielle de la surface de paroi de filtre (8) est réalisée de manière étanche aux gaz.

3. Élément de filtre selon la revendication 2, **caractérisé en ce que** la région partielle étanche aux gaz de la surface de paroi de filtre (8), qui notamment est tournée vers les canaux d'entrée (4), présente au moins un catalyseur.

4. Élément de filtre selon l'une quelconque des revendications précédentes, **caractérisé en ce que** la région partielle étanche aux gaz de la surface de paroi de filtre (8) qui est notamment tourné vers les canaux d'entrée (4), présente un acier spécial.

5. Élément de filtre selon l'une quelconque des revendications précédentes, **caractérisé en ce que** l'élément de filtre (10) réalisée par exemple sous forme de corps moulé extrudé constitué d'un matériau en céramique, par exemple en cordiérite.

6. Élément de filtre selon l'une quelconque des revendications précédentes, **caractérisé en ce que** la région partielle étanche aux gaz de la surface de paroi de filtre (8) qui est notamment tournée vers les canaux d'entrée (4) est réalisée sous forme de bouchon (9).

7. Élément de filtre selon l'une quelconque des revendications précédentes, **caractérisé en ce que** la surface en section transversale de tous les canaux d'entrée (4) est plus grande que la surface en section transversale de tous les canaux de sortie (5) et **en ce que** le nombre des canaux d'entrée (4) est supérieur au nombre des canaux de sortie (5).

8. Moteur à combustion interne diesel, comprenant au moins un dispositif de filtre (30) se trouvant dans la ligne d'échappement, lequel présente conjointement au moins un catalyseur d'oxydation diesel (DOC) et au moins un filtre à particules diesel (DPS) dans un corps en céramique, celui-ci présentant au moins un élément de filtre (10) selon l'une quelconque des revendications 1 à 7.

9. Procédé de filtration, en particulier de gaz d'échappement d'un moteur à combustion interne diesel, **caractérisé en ce que** l'on utilise un dispositif selon l'une quelconque des revendications précédentes présentant un effet de CRT.
